# NEUE EUROPÄISCHE PATENTSCHRIFT

(11) **EP 2 369 310 B2**
(45) Veröffentlichungstag und Bekanntmachung des Hinweises auf die Entscheidung über den Einspruch: **09.11.2022**
(45) Hinweis auf die Patenterteilung: 09.05.2018
(21) Anmeldenummer: 11002053.4
(22) Anmeldetag: 11.03.2011
(51) Int. Cl.: G01G 11/04

(54) **Bandwägevorrichtung**
Weighing apparatus
Dispositif de pesage

(30) Priorität: 16.03.2010 DE 102010011561
(43) Veröffentlichungstag der Anmeldung: 28.09.2011
(73) Patentinhaber: Bizerba SE & Co. KG, 72336 Balingen (DE)
(72) Erfinder: Eppler, Heinz, 72469 Messstetten (DE)
(74) Vertreter: Manitz Finsterwald Patent- und Rechtsanwaltspartnerschaft mbB

(56) Entgegenhaltungen:
- EP-A1- 2 045 198
- EP-A1- 2 090 944
- EP-A1- 2 369 310
- EP-A2- 1 400 789
- EP-B1- 0 319 202
- EP-B1- 1 511 977
- WO-A1-2008/113584
- WO-A1-2009/052904
- WO-A2-2005/111554
- CN-Y- 201 226 181
- DE-A1- 10 134 281
- DE-A1-102004 024 109
- DE-A1-102004 034 653
- DE-A1-102004 034 653
- DE-A1-102005 055 753
- DE-A1-102005 055 754
- DE-A1-102006 011 791
- DE-A1-102006 033 651
- DE-A1-102006 052 486
- DE-A1-102007 020 311
- DE-A1-102007 025 580
- DE-A1-102007 035 753
- DE-A1-102008 009 116
- DE-B4- 10 041 251
- DE-B4-102005 048 724
- DE-B4-102005 055 753
- DE-C1- 4 444 263
- JP-A- H05 248 928
- JP-A- 2000 097 752
- JP-A- 2005 010 951
- JP-A- 2006 098 268
- JP-A- 2009 069 108
- JP-U- 3 135 150
- US-A- 5 491 540
- US-A1- 2004 133 385
- US-A1- 2006 170 551
- US-A1- 2007 063 029
- US-A1- 2007 222 612
- US-A1- 2009 032 311
- US-A1- 2009 032 311
- US-A1- 2009 308 665
- US-A1- 2009 308 665
- "Feldbus", Wikipedia, 2 March 2010 (2010-03-02), Retrieved from the Internet: URL:https://de.wikipedia.org/w/index.php?t itle=Feldbus&oldid=71333016
- ?Vortrag zum ABA-PTB-Gespräch, dynamisches Wägen", veroffentlicht am 4. Dezember 2001, ?Elektronisches Typenschild für Motoren"

## Beschreibung

Die vorliegende Erfindung betrifft eine Bandwägevorrichtung gemäß dem Oberbegriff des Anspruchs 1. Eine derartige Wägevorrichtung ist aus dem Dokument DE 10 2004 034 653 A1 bekannt.

Kontrollwaagen oder Checkweigher werden üblicherweise innerhalb von Produktionsprozessen zur Produktinspektion oder Gewichtskontrolle eingesetzt, beispielsweise zur Überprüfung von Füll- oder Verpackungsvorgängen. Die dabei gewonnenen Daten können dann eine Grundlage für statistische Auswertungen zur Qualitätskontrolle bilden. Diese Daten können im Rahmen einer "inline"-Prozesskontrolle jedoch auch sofort ausgewertet werden, um weitere Produktionsschritte zu steuern, wie z.B. Aussonderung von Fehlgewichten, Tendenzprognose zur kontinuierlichen Anpassung einer Füll- oder Dosieranlage, Sortierung oder Klassifizierung.

Derartige statische oder dynamische Kontrollwaagen sind mit einer Wägeplatte versehen, die auf einer Wägezelle der Kontrollwaage abgestützt ist, die die eigentliche Gewichtsbestimmung durchführt. Insbesondere bei Nassbereichsanwendungen in der Lebensmittelindustrie und/oder bei unverpackten Lebensmitteln kann es zu Verschmutzungen der Wägeplatte kommen, welches dann zur Reinigung von der Kontrollwaage abgenommen wird. Darüber hinaus wird die Wägeplatte auch dann abgenommen, wenn sie einer Reparatur oder einem Service unterzogen wird.

Eine exakte Gewichtsbestimmung durch eine Wägezelle oder Messzelle kann dabei in der Regel immer nur mit der Wägeplatte durchgeführt werden, für die die zugehörige Kontrollwaage konfiguriert wurde. Diese Konfiguration besteht insbesondere darin, dass für eine Wägeplatte Betriebsparameter, insbesondere Korrekturparameter bestimmt werden, die in der zugehörigen Kontrollwaage hinterlegt werden und dann bei einer Gewichtsbestimmung berücksichtigt werden können. Wird eine Kontrollwaage mit einer Wägeplatte betrieben, auf die die Kontrollwaage nicht abgestimmt ist, wird die Gewichtsbestimmung in der Regel fehlerhaft sein, da die Wägeplatten fertigungstoleranzbedingt voneinander abweichen. Diese Abweichungen führen insbesondere bei dynamischen Kontrollwaagen, die mit hoher Bandgeschwindigkeit betrieben werden, in der Regel zu nicht tolerierbaren Fehlern bei der Gewichtsbestimmung.

Die vorstehenden Ausführungen zur exakten Gewichtsbestimmung gelten analog z.B. auch für einen Preisauszeichner, welcher in der Regel zum dynamischen Wiegen ungleichgewichtiger Waren verwendet wird.

Das Dokument US 2009/0308665 A1 beschreibt eine Wägevorrichtung, beispielsweise für eine Tablettenverwiegung, mit einer oder mehreren Wägezellen, die in einer Aufnahmestruktur aufgenommen sind. Die jeweilige Wägezelle ist mit einem Anschlussstecker versehen, der in eine jeweilige Aufnahmebuchse der Aufnahmestruktur gesteckt wird. Hierdurch können Daten von der Wägezelle zu der Aufnahmestruktur übertragen werden.

Das Dokument US 2009/0032311 A1 beschreibt eine Bandwägevorrichtung mit mehreren, nebeneinander angeordneten Wägeplatten, die jeweils über einer eigenen Wägezelle angeordnet sind.

Der Erfindung liegt die Aufgabe zugrunde, eine Wägevorrichtung der eingangs genannten Art anzugeben, die gewährleisten kann, dass eine Waage nur mit einer solchen Wägeplatte betrieben wird, mit der eine exakte Gewichtsbestimmung möglich ist.

Diese Aufgabe wird durch eine Vorrichtung mit den Merkmalen des Anspruchs 1 gelöst.

Hierdurch kann erreicht werden, dass der insbesondere eine Wägezelle aufweisenden Waage von der Wägeplatte Daten übertragen werden können, anhand welcher Daten dann eine exakte Gewichtsbestimmung möglich wird. Bei den übertragenen Daten kann es sich beispielsweise um wenigstens eine Identifikation der Wägeplatte, insbesondere wenigstens eines Teils hiervon, handeln, zu welcher jeweiligen Identifikation in der Waage bei der Berechnung eines Gewichts zu berücksichtigende Betriebsparameter für die Gewichtsbestimmung hinterlegt sind, und/oder um Betriebsparameter der Wägeplatte, insbesondere wenigstens eines Teils hiervon, selbst. Insbesondere können aus den Betriebsparametern, insbesondere den vorgenannten Korrekturparametern, und der eingestellten Bandgeschwindigkeit ein oder mehrere Korrekturwerte für die Gewichtsbestimmung ermittelt werden. Bei dem vorgenannten wenigstens einen Teil handelt es sich insbesondere um einen Wägeplattenkörper und/oder ein Förderband der Wägeplatte. Bei den die Wägeplatte kennzeichnenden Daten kann es sich insbesondere um die Wägeplatte insgesamt oder als Ganzes bzw. Einheit kennzeichnende Daten, den Wägeplattenkörper kennzeichnende Daten und/oder das Förderband kennzeichnende Daten handeln.

Insbesondere bilden die wenigstens eine Datenübertragungseinrichtung und die Empfangseinrichtung ein Kommunikationssystem. Die Wägeplatte umfasst insbesondere den vorgenannten Wägeplattenkörper, der in der Regel mit dem vorgenannten Förderband, d.h. wenigstens einem Transportband bzw. Gurt, versehen ist, auf dem die Waren über die Wägezellen transportiert werden. Die wenigstens eine Datenübertragungseinrichtung kann grundsätzlich an dem Wägeplattenkörper und/oder dem Förderband vorgesehen sein. Grundsätzlich können auch mehrere Empfangseinrichtungen vorgesehen sein, die jeweils einer eigenen Datenübertragungseinrichtung zugeordnet sein können. Bei der Ware kann es sich beispielsweise um ein Produkt, eine Verpackung oder ein Paket handeln. Insbesondere ist die Wägeplatte auf der Waage abgestützt und/oder ist die Waage unter bzw. unterhalb der Wägeplatte angeordnet und/oder die Wägeplatte über bzw. oberhalb der Waage angeordnet.

Insbesondere für den Fall, dass lediglich die die Wägeplatte identifizierenden Daten übertragen werden, kann durch die erfindungsgemäße Wägevorrichtung ein versehentliches Vertauschen der Wägeplatten mehrerer Waagen erkannt bzw. verhindert werden. Ferner sind, damit zumindest bis zu einer bestimmten maximalen Bandgeschwindigkeit die vorgenannten speziellen Abstimmungen nicht erforderlich sind, hochpräzise gefertigte Wägeplatten bekannt. Durch die vorliegende Erfindung werden die Anforderungen an die Maßgenauigkeit, insbesondere die Ebenheit der Wägeplatten geringer. Darüber hinaus können höhere maximale Bandgeschwindigkeiten, wie sie vorstehend genannt sind, erreicht werden.

Grundsätzlich können die wenigstens eine Datenübertragungseinrichtung und die Empfangseinrichtung über eine elektrische Leitung, beispielsweise über eine elektrische Steckverbindung, miteinander verbunden sein bzw. verbunden werden. Vorzugsweise erfolgt die Übertragung der Daten jedoch berührungslos, insbesondere um einen potentiellen, durch eine elektrische Leitung hervorgerufenen Kraftnebenschluss zu vermeiden, d.h. das vorgenannte Kommunikationssystem ist vorzugsweise zur berührungslosen bzw. kontaktlosen oder drahtlosen Übertragung der Daten ausgebildet.

Bevorzugt ist die wenigstens eine Datenübertragungseinrichtung als RFID-Transponder bzw. RFID-Tag und die Empfangseinrichtung als RFID-Lesegerät ausgebildet, d.h. das vorgenannte Kommunikationssystem ist als ein RFID-System ausgebildet. RFID-Systeme sind günstig erhältlich und verursachen daher keine hohen Zusatzkosten. Der Transponder kann ein aktiver Transponder sein, oder ein passiver Transponder, dessen Betrieb auf dem Prinzip der Lastmodulation beruht. RFID-Systeme sind grundsätzlich bekannt und müssen daher hier nicht weiter erläutert werden.

Nicht von der Erfindung umfasst ist, dass die Daten oder ein Teil hiervon in einem von der wenigstens eine Datenübertragungseinrichtung separaten Speicher hinterlegt sind. Es ist erfindungsgemäß vorgesehen, dass die Daten oder der Teil hiervon in der wenigstens eine Datenübertragungseinrichtung, insbesondere dem vorgenannten RFID-Transponder, hinterlegt sind, beispielsweise in einem EEPROM. Bei dem Teil kann es sich insbesondere um die die Wägeplatte identifizierenden Daten handeln.

Die Wägeplatte kann einen Wägeplattenkörper mit einer ersten Datenübertragungseinrichtung und ein Förderband mit einer zweiten Datenübertragungseinrichtung umfassen, wobei den Wägeplattenkörper kennzeichnende Daten in der ersten Datenübertragungseinrichtung und das Förderband kennzeichnende Daten in der zweiten Datenübertragungseinrichtung hinterlegt sind. Dies ist insbesondere dann von Vorteil, wenn Betriebsparameter der Wägeplatte für den Wägeplattenkörper und das Förderband getrennt voneinander bestimmt werden. Bevorzugt sind die erste Datenübertragungseinrichtung und die zweite Datenübertragungseinrichtung jeweils wie vorstehend erläutert ausgebildet.

Nach einer Ausbildung der Erfindung ist die Waage dazu ausgelegt, die die Wägeplatte identifizierenden Daten bzw. wenigstens eine ID, beispielsweise eine eindeutige Nummer, mit in einem Speicher der Waage hinterlegten Wägeplattenidentifikationsdaten zu vergleichen. Die in dem Speicher hinterlegten Wägeplattenidentifikationsdaten können die Identifikation bzw. wenigstens eine ID einer oder mehrerer Wägeplatten, insbesondere wenigstens eines Teils der jeweiligen Wägeplatte, umfassen, für den oder die die jeweilige Waage konfiguriert wurde. Durch den Vergleich der an die Waage übertragenen Identifikationsdaten mit den in der Waage hinterlegten Identifikationsdaten kann also verifiziert werden, ob eine aufgesetzte Wägeplatte bzw. der wenigstens eine Teil hiervon für den Betrieb mit der jeweiligen Waage vorgesehen bzw. zugelassen ist. Somit kann wirksam verhindert werden, dass eine Waage mit einer "falschen" Wägeplatte bzw. einem "falschen" Teil betrieben wird, was in der Regel eine inkorrekte Gewichtsbestimmung zur Folge hätte. Die der jeweiligen Wägeplatte zugehörigen vorgenannten Betriebsparameter sind dabei bevorzugt waagenseitig hinterlegt, können grundsätzlich aber auch, ggf. zusätzlich, wägeplattenseitig hinterlegt sein und mit den Identifikationsdaten übertragen werden.

Der Vergleich kann beispielsweise bei einem Aufsetzen der Wägeplatte auf die Waage und/oder bei einem zumindest versuchten Start der Wägevorrichtung durchgeführt werden.

Vorzugsweise ist die Wägevorrichtung derart ausgelegt, dass ein insbesondere bestimmungsgemäßer Betrieb der Wägevorrichtung, insbesondere eine Gewichtsbestimmung, nur dann möglich ist, wenn der Vergleich ergibt, dass die Waage für den Betrieb mit der Wägeplatte erforderliche Betriebsparameter besitzt. Andernfalls kann der Betrieb der Wägevorrichtung gesperrt und/oder es eine Fehlermeldung ausgegeben werden.

Nach einer anderen Ausbildung der Erfindung ist die Wägevorrichtung, insbesondere das vorgenannte Kommunikationssystem dazu ausgelegt, ggf. zusätzlich zu den die Wägeplatte identifizierenden Daten, der Wägeplatte zugeordnete Betriebsparameter zu übertragen, die für den insbesondere korrekten Betrieb der Waage mit der Wägeplatte erforderlich sind und/oder bei der Berechnung des Gewichts einer Ware berücksichtigt werden. Die der Wägeplatte zugeordneten Betriebsparameter können also insbesondere ebenfalls wägeplattenseitig, bevorzugt in der Datenübertragungsseinrichtung, hinterlegt werden. Somit wird ermöglicht, dass eine Wägeplatte mit einer beliebigen Waage verwendet werden kann, d.h. eine Waage kann auch mit Wägeplatten betrieben werden, über die die Waage keine Informationen besitzt. Wägeplatten sind damit frei austauschbar und können z.B. für Reparaturzwecke einfach gewechselt werden, ohne dass eine Bestimmung der Betriebsparameter an der jeweiligen Waage erforderlich ist. Vielmehr können die Betriebsparameter bereits werkseitig bestimmt werden. Damit müssen die Betriebsparameter insgesamt nur einmal bestimmt werden.

Insbesondere handelt es sich bei den Betriebsparametern um Parameter, die sich aus einer oder mehreren wägetechnisch und/oder für die Gewichtsbestimmung relevanten Eigenschaften der Wägeplatte bestimmen und/oder in die Gewichtsbestimmung eingehen, und/oder um Korrekturparameter, die auf diese eine oder mehreren Eigenschaften zurückgehen, insbesondere um Parameter, die eine Abweichung von vorgegebenen Betriebsparametern definieren. Die Eigenschaften können den statischen Betrieb der Wägevorrichtung betreffen, wie z.B. die Vorlast der Wägeplatte oder die Abmessungen der Wägeplatte, und/oder den dynamischen Betrieb der Waage, wie z.B. die Abmessungen, die Transportgeschwindigkeit, die Oberflächenbeschaffenheit oder Trägheitsdaten der Wägeplatte.

Es können mehrere Betriebsparametersätze für verschiedene Bandgeschwindigkeiten vorgesehen sein. Dies ist insbesondere dann von Vorteil, wenn es sich bei der Waage um eine dynamische Waage bzw. Durchlaufwaage handelt, da die vorgenannten Betriebsparameter, insbesondere Korrekturparameter, in der Regel geschwindigkeitsabhängig. Dies gilt sowohl für den Fall, dass die Betriebsparametersätze wägeplattenseitig vorgesehen sind, als auch für den Fall waagenseitiger Hinterlegung. Im Betrieb der Wägevorrichtung kann dann der der jeweils ausgewählten Bandgeschwindigkeit zugeordnete Betriebsparametersatz verwendet werden. Es kann aber auch lediglich ein Betriebsparametersatz für mehrere, insbesondere sämtliche Bandgeschwindigkeiten vorgesehen sein.

Um beispielsweise für eine Reinigung ein schnelles und einfaches Abnehmen der Wägeplatte zu ermöglichen, ist es bevorzugt, wenn die Wägeplatte über ein Schnellwechselsystem an der Waage montiert ist, wobei bevorzugt die Wägeplatte ohne Werkzeug lösbar und festsetzbar ist.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigt, in schematischer Darstellung,

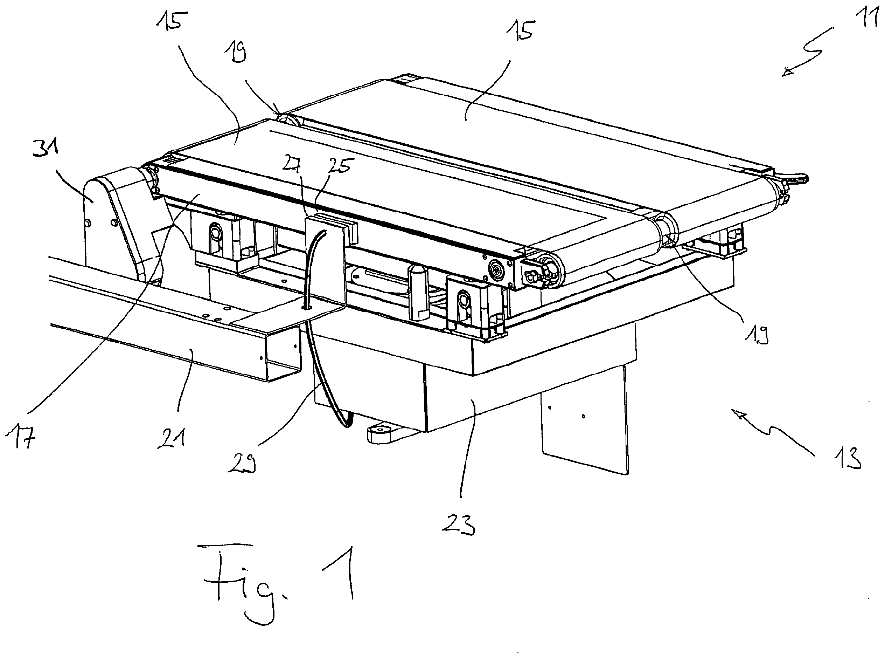

Fig. 1 eine erfindungsgemäße Wägevorrichtung mit einer Wägeplatte und einer Waage.

Die in Fig. 1 gezeigte Wägevorrichtung, insbesondere Bandwägevorrichtung, beispielsweise ein Preisauszeichner oder eine Kontrollwaage, umfasst eine Wägeplatte 11 bzw. ein Wägeband und eine Waage 13, insbesondere eine Förderbandwaage. Die mit der Waage 13 koppelbare Wägeplatte 11 umfasst einen Wägeplattenkörper bzw. Wägebandkörper 17, der mit zwei parallel zueinander angeordneten Transportbänder 15 versehen ist, die um den Wägeplattenkörper 17 herum verlaufen und ein Förderband bilden. Der Wägeplattenkörper 17 ist auf seinen beiden Stirnseiten mit von einem Motor 31 angetriebenen Bandrollen 19 (für die Transportbänder 15) versehen, durch die dann die beiden Transportbänder 15 synchron angetrieben werden. Die Waage 13 umfasst ein Gerätegestell 21 und eine Wägezelle 23, auf die die Wägeplatte 11 schnell und einfach abnehmbar aufgesetzt ist, zur Bestimmung des Gewichts einer auf die Wägeplatte 11 befindlichen Ware. Die Waage 13 ist dabei als eine dynamische Waage ausgebildet, d.h. die Waren werden im laufenden Betrieb der Wägevorrichtung mit Bandgeschwindigkeiten von beispielsweise 120 Meter/min ohne Stopp über den Wägeplattenkörper 17 hinwegbewegt.

Üblicherweise umfasst die Waage ferner weitere Bänder bzw. Förderbänder (nicht dargestellt), insbesondere ein Zuführband, das die Waren von einem vorgeschalteten Prozess übernimmt, ein Separierband, das sicherstellt, dass der Wägeplatte jeweils nur eine Ware zugeführt wird und/oder ein Abgabeband, das die Waren an einen nachgeschalteten Prozess übergibt, sowie ein Auswerte- und Steuerlogik. Zusätzlich kann die Waage mit weiteren Einrichtungen versehen sein, z.B. einem Metalldetektor.

Erfindungsgemäß ist an der Wägeplatte 11, z.B. seitlich an dem Wägeplattenkörper 17, eine als passiver RFID-Transponder 25 ausgebildete Datenübertragungseinrichtung und an der Waage 13, insbesondere dem Gerätegestell 21, eine als RFID-Lesegerät 27 ausgebildete Empfangseinrichtung vorgesehen. Der RFID-Transponder 25 kann beispielsweise aber auch an der Unterseite des seitlichen Endes des Wägeplattenkörpers 17 angeordnet sein. Der Leseabstand zwischen dem Transponder 25 und dem Lesegerät 27 kann beispielsweise ca. 10 mm betragen. Der Transponder 25 und das Lesegerät 27 bilden ein Kommunikationssystem, durch das Daten von der Wägeplatte 11 an die Waage 13 berührungslos übertragen werden können. Hierfür erzeugt das Lesegerät 27 ein elektromagnetisches Hochfrequenzfeld geringer Reichweite, das einerseits zur Energieversorgung des Transponders 25 dient und andererseits einer Lastmodulation durch den Transponder 25 unterworfen werden kann. Grundsätzlich kann der RFID-Transponder 25 auch in oder an einem der Transportbänder 15 angeordnet sein.

Die zu übertragenden Daten sind in einem Speicher des RFID-Transponders 25 hinterlegt. Bei den zu übertragenden Daten handelt es sich um die Wägeplatte 11 kennzeichnende Daten. Die übertragenen Daten können dann empfängerseitig über ein Kabel 29 von dem RFID-Lesegerät 27 an die Wägezelle 23 weitergeleitet werden.

Die zu übertragenden Daten enthalten eine Angabe, die eine Identifikation der Wägeplatte 11 erlaubt, d.h. eine eindeutige ID, z.B. eine Seriennummer. Die Wägeplatte 11 kann sich somit gegenüber der Waage 13 identifizieren. In einem Speicher der Waage 13 sind für ein oder mehrere Wägeplatten Betriebs- bzw. Konfigurationsparameter hinterlegt, welche bei der Gewichtsbestimmung durch die Wägezelle 23 berücksichtigt werden. Anhand der Identifikation der Wägeplatte 11, die an die Waage 13 übermittelt wurde, prüft die Waage 13, ob zu der Wägeplatte 11 gehörige Betriebsparameter in dem Speicher hinterlegt sind. Falls dies nicht der Fall ist, wird eine Fehlermeldung ausgegeben und der Betrieb der Wägevorrichtung wird unterbunden. Die vorgenannte Prüfung kann beispielsweise bei einem Start der Wägevorrichtung erfolgen.

Dies ist deshalb von Vorteil, da eine genaue Gewichtsbestimmung durch die Wägezelle 23 nur mit einer Wägeplatte 11 möglich ist, für die die Waage 13 die entsprechenden Betriebsparameter besitzt. Der Grund hierfür liegt darin, dass die Gewichtsbestimmung sensibel auf Fertigungstoleranzen bei der Herstellung der Wägeplatten reagiert. Es werden bei der Berechnung eines Gewichts daher Korrekturparameter berücksichtigt, die speziell für die jeweilige Wägeplatte empirisch ermittelt wurden. Ggf. sind aufgrund einer Bandgeschwindigkeitsabhängigkeit der Korrekturparameter in dem Speicher der Waage 13 für die jeweilige Wägeplatte mehrere Parametersätze hinterlegt, die verschiedenen Bandgeschwindigkeiten zugeordnet sind, wobei dann derjenige Parametersatz ausgewählt werden kann, der der jeweils eingestellten Bandgeschwindigkeit entspricht.

Alternativ zu den die Wägeplatte 11 identifizierenden Daten können durch den Transponder 25 und das Lesegerät 27 auch nur die vorgenannten Betriebsparameter bzw. Betriebsparametersätze, die hierzu dann bevorzugt in dem vorgenannten Speicher des Transponder 25 hinterlegt sind, von der Wägeplatte 11 an die Waage 13 übertragen werden. Die Betriebsparameter bzw. Betriebsparametersätze müssen in diesem Fall dann waagenseitig nicht mehr hinterlegt sein. Dies besitzt den Vorteil, dass eine Wägeplatte mit einer beliebigen Waage verwendet bzw. eine Waage mit beliebigen Wägeplatten betrieben werden kann, d.h. Wägeplatten sind untereinander frei austauschbar, ohne dass die Waagen für die Wägeplatten speziell vorbereitet sein müssen. Damit wird ein flexibler Einsatz der Wägeplatten ermöglicht.

Darüber hinaus ist es auch möglich, dass durch das RFID-System sowohl die Wägeplatte identifizierende Daten als auch Betriebsparameter übertragen werden, wobei waagenseitig sowohl Wägeplattenidentifikationsdaten als auch Betriebsparameter hinterlegt sind. Damit können sowohl Identifikationsdaten als auch Betriebsparameter miteinander verglichen werden, wobei durch die Redundanz ein besonders hoher Grad an Sicherheit für eine genaue Gewichtsbestimmung gewährleistet werden kann.

### Bezugszeichenliste

- 11: Wägeplatte
- 13: Waage
- 15: Transportband
- 17: Wägeplattenkörper
- 19: Bandrolle
- 21: Gerätegestell
- 23: Wägezelle
- 25: RFID-Transponder
- 27: RFID-Lesegerät
- 29: Kabel
- 31: Motor

## Patentansprüche

1. Bandwägevorrichtung zum Bestimmen des Gewichts einer Ware, mit einer ein Gerätegestell (21) und eine Wägezelle (23) aufweisenden Waage (13) und einer Wägeplatte (11), die auf die Wägezelle (23) der Waage (13) abnehmbar aufgesetzt ist,
wobei zur Übertragung von die Wägeplatte (11) kennzeichnenden, insbesondere identifizierenden Daten von der Wägeplatte (11) zu der Waage (13) die Wägeplatte (11) mit wenigstens einer Datenübertragungseinrichtung (25) und die Waage (13) mit einer Empfangseinrichtung (27) versehen ist,
**dadurch gekennzeichnet,**
**dass** die Daten oder ein Teil hiervon in der wenigstens einen Datenübertragungseinrichtung (25), insbesondere einem RFID-Transponder, hinterlegt sind.

2. Bandwägevorrichtung nach Anspruch 1,
**dadurch gekennzeichnet,**
**dass** die Übertragung der Daten berührungslos erfolgt, wobei bevorzugt die wenigstens eine Datenübertragungseinrichtung (25) als RFID-Transponder und die Empfangseinrichtung (27) als RFID-Lesegerät ausgebildet ist.

3. Bandwägevorrichtung nach einem der vorstehenden Ansprüche,
**dadurch gekennzeichnet,**
**dass** die Wägeplatte (11) einen Wägeplattenkörper (17) mit einer ersten Datenübertragungseinrichtung und ein Förderband (15) mit einer zweiten Datenübertragungseinrichtung umfasst, wobei den Wägeplattenkörper (17) kennzeichnende Daten in der ersten Datenübertragungseinrichtung und das Förderband (15) kennzeichnende Daten in der zweiten Datenübertragungseinrichtung hinterlegt sind.

4. Bandwägevorrichtung nach einem der vorstehenden Ansprüche,
**dadurch gekennzeichnet,**
**dass** die Waage (13) dazu ausgelegt ist, die die Wägeplatte (11) identifizierenden Daten mit in einem Speicher der Waage (13) hinterlegten Wägeplattenidentifikationsdaten zu vergleichen.

5. Bandwägevorrichtung nach Anspruch 4,
**dadurch gekennzeichnet,**
**dass** die Waage (13) dazu ausgelegt ist, den Vergleich bei einem Aufsetzen der Wägeplatte (11) auf die Waage (13) und/oder bei einem Start der Bandwägevorrichtung durchzuführen.

6. Bandwägevorrichtung nach Anspruch 4 oder 5,
**dadurch gekennzeichnet,**
**dass** die Bandwägevorrichtung derart ausgelegt ist, dass ein Betrieb der Bandwägevorrichtung nur dann möglich ist, wenn der Vergleich ergibt, dass die Waage (13) für den Betrieb mit der Wägeplatte (11) erforderliche Betriebsparameter besitzt.

7. Bandwägevorrichtung nach einem der vorstehenden Ansprüche,
**dadurch gekennzeichnet,**
**dass** die Bandwägevorrichtung dazu ausgelegt ist, der Wägeplatte (11) zugeordnete Betriebsparameter zu übertragen, die für den Betrieb der Waage (13) mit der Wägeplatte (11) erforderlich sind.

8. Bandwägevorrichtung nach Anspruch 6 oder 7,
**dadurch gekennzeichnet,**
**dass** es sich bei den der Wägeplatte (11) zugeordneten Betriebsparametern um Korrekturparameter handelt, die bei der Berechnung des Gewichts einer Ware berücksichtigt werden.

9. Bandwägevorrichtung nach einem der vorstehenden Ansprüche,
**dadurch gekennzeichnet,**
**dass** die Wägeplatte (11) über ein Schnellwechselsystem an der Waage (13) montiert ist.

## Claims

1. A belt weighing apparatus for determining the weight of a product, comprising a scale (13), which has a device rack (21) and a load cell (23), and a weighing plate (11) which is removably placed onto the load cell (23) of the scale (13),
wherein the weighing plate (11) is provided with at least one data transmission device (25) and the scale (13) is provided with a reception device (27) to transmit data which characterize, in particular identify, the weighing plate (11) from the weighing plate (11) to the scale (13),
**characterized in that**
the data or a portion thereof is stored in the at least one data transmission device (25), in particular in an RFID transponder.

2. A belt weighing apparatus in accordance with claim 1,
**characterized in that**
the transmission of the data takes place in a contactless manner, with the at least one data transmission device (25) preferably being configured as an RFID transponder and the reception device (27) preferably being configured as an RFID reading device.

3. A belt weighing apparatus in accordance with one of the preceding claims,
**characterized in that**
the weighing plate (11) includes a weighing plate body (17) having a first data transmission device and includes a conveyor belt (15) having a second data transmission device, with data characterizing the weighing plate body (17) being stored in the first data transmission device and data characterizing the conveyor belt (15) being stored in the second data transmission device.

4. A belt weighing apparatus in accordance with any one of the preceding claims,
**characterized in that**
the scale (13) is configured to compare the data identifying the weighing plate (11) with weighing plate identification data stored in a memory of the scale (13).

5. A belt weighing apparatus in accordance with claim 4,
**characterized in that**
the scale (13) is configured to carry out the comparison on a placing of the weighing plate (11) onto the scale (13) and/or on a start of the belt weighing apparatus.

6. A belt weighing apparatus in accordance with claim 4 or claim 5,
**characterized in that**
the belt weighing apparatus is configured such that an operation of the belt weighing apparatus is only possible when the comparison shows that the scale (13) has operating parameters required for the operation with the weighing plate (11).

7. A belt weighing apparatus in accordance with any one of the preceding claims,
**characterized in that**
the belt weighing apparatus is configured to transmit operating parameters associated with the weighing plate (11) which are required for the operation of the scale (13) with the weighing plate (11).

8. A belt weighing apparatus in accordance with claim 6 or claim 7,
**characterized in that**
the operating parameters associated with the weighing plate (11) are correction parameters which are taken into account in the calculation of the weight of a product.

9. A belt weighing apparatus in accordance with any one of the preceding claims,
**characterized in that**
the weighing plate (11) is mounted at the scale (13) via a quick-change system.

## Revendications

1. Dispositif de pesage à bande destiné à déterminer le poids d'une marchandise, comportant une balance (13) munie d'un bâti (21) et d'une cellule de pesage (23) et un plateau de pesage (11) qui est posé de façon amovible sur la cellule de pesage (23) de la balance (13),
dans lequel
pour transmettre des données caractérisant, en particulier identifiant le plateau de pesage (11) depuis le plateau de pesage (11) jusqu'à la balance (13), le plateau de pesage (11) est pourvu d'au moins un moyen de transmission de données (25) et la balance (13) est pourvue d'un moyen de réception (27),
**caractérisé en ce que**
les données ou une partie de celles-ci sont stockées dans ledit au moins un moyen de transmission de données (25), en particulier dans un transpondeur RFID.

2. Dispositif de pesage à bande selon la revendication 1,
**caractérisé en ce que**
la transmission des données s'effectue sans contact physique, et de préférence ledit au moins un moyen de transmission de données (25) est réalisé sous forme de transpondeur RFID et le moyen de réception (27) est réalisé sous forme d'appareil de lecture RFID.

3. Dispositif de pesage à bande selon l'une des revendications précédentes,
**caractérisé en ce que**
le plateau de pesage (11) comprend un corps (17) de plateau de pesage pourvu d'un premier moyen de transmission de données et une bande de convoyage (15) pourvue d'un second moyen de transmission de données, et des données caractérisant le corps de plateau de pesage (17) sont stockées dans le premier moyen de transmission de données, et des données caractérisant la bande de convoyage (15) sont stockées dans le second moyen de transmission de données.

4. Dispositif de pesage à bande selon l'une des revendications précédentes,
**caractérisé en ce que**
la balance (13) est conçue pour comparer les données identifiant le plateau de pesage (11) avec des données d'identification de plateau de pesage stockées dans une mémoire de la balance (13).

5. Dispositif de pesage à bande selon la revendication 4,
**caractérisé en ce que**
la balance (13) est conçue pour effectuer la comparaison lors d'une pose du plateau de pesage (11) sur la balance (13) et/ou lors d'un démarrage du dispositif de pesage à bande.

6. Dispositif de pesage à bande selon la revendication 4 ou 5,
**caractérisé en ce que**
le dispositif de pesage à bande est conçu de telle sorte qu'un fonctionnement du dispositif de pesage à bande n'est possible que lorsque la comparaison a pour résultat que la balance (13) présente des paramètres de fonctionnement requis pour le fonctionnement avec le plateau de pesage (11).

7. Dispositif de pesage à bande selon l'une des revendications précédentes,
**caractérisé en ce que**
le dispositif de pesage à bande est conçu pour transmettre des paramètres de fonctionnement associés au plateau de pesage (11), qui sont requis pour le fonctionnement de la balance (13) avec le plateau de pesage (11).

8. Dispositif de pesage à bande selon la revendication 6 ou 7,
**caractérisé en ce que**
les paramètres de fonctionnement associés au plateau de pesage (11) sont des paramètres de correction qui sont pris en compte lors du calcul du poids d'une marchandise.

9. Dispositif de pesage à bande selon l'une des revendications précédentes,
**caractérisé en ce que**
le plateau de pesage (11) est monté sur la balance (13) par un système de changement rapide.
